# EUROPEAN PATENT APPLICATION

(11) **EP 4 366 108 A1**
(43) Date of publication of application: **08.05.2024**
(21) Application number: 23306906.1
(22) Date of filing: 03.11.2023
(51) Int. Cl.: H02J 3/00, H01H 9/26, H02J 9/06

(54) **POWER TRANSFER SWITCHING DEVICE**

(30) Priority: 04.11.2022 CN 202222944639 U
(71) Applicant: SCHNEIDER ELECTRIC INDUSTRIES SAS, 92500 Rueil-Malmaison (FR)
(72) Inventor: WU, Wei, Shanghai 201203 (CN); ZENG, Xiaojing, Shanghai 201203 (CN); XIE, Haoyu, Shanghai 201203 (CN); BI, Baoyun, Shanghai 201203 (CN)
(74) Representative: Manitz Finsterwald Patent- und Rechtsanwaltspartnerschaft mbB

(57) **Abstract**

Embodiments of the present disclosure provide a power transfer switching device. The power transfer switching device includes: an actuator adapted to perform a transfer operation on power supplies; one or more drive mechanisms connected to the actuator and adapted to mechanically drive the actuator; a controller adapted to output electric power to the one or more drive mechanisms; and a connection member comprising wires, a first port portion, and one or more second port portions electrically connected to the first port portion via the wires, the first port portion electrically connectable to the controller, the one or more second port portions respectively corresponding to the one or more drive mechanisms, each of the second port portions electrically connectable to a corresponding drive mechanism. The solution of the present disclosure has the advantage of providing a product framework covering power transfer switches of different current levels, thereby reducing the product research and development cost and cycle.

## Description

### FIELD

The present disclosure relates to the field of electric devices, and more specifically, to a power transfer switching device.

### BACKGROUND

Power transfer switching devices such as Automatic Transfer Switching Equipment (ATSE) and the like can transfer one or more load circuits from a power source to a further power source. For example, the ATSE can connect a load from a primary power source to a backup power source, as required or based on a monitored failure of the primary power source, to allow the backup power source to continue to supply power to the load and thus avoid a power supply interruption.

In the transfer operation, the transfer switching device typically provides a drive force for opening or closing via an electromagnetic mechanism. Such drive force is related to the main loop current between the power source and the load. In general, as the main loop current is higher, the drive force required for opening or closing is greater, and in order to generate a greater drive force, it is required to provide higher current to the electromagnetic mechanism. Therefore, for a higher main loop current level, the transfer switching device needs more power consumption and a higher cost.

If a transfer switching device bearing high current is used to cover all product models from low current to high current, a high cost is incurred for the low-current model of the transfer switching device; if different product frameworks are used to design transfer switching devices of different current levels, they require a high research and development cost and a long cycle.

### SUMMARY

In order to at least partly solve the above-mentioned problem and other possible problems, embodiments of the present disclosure provide an improved power transfer switching device.

In accordance with a first aspect of the present disclosure, there is provided a power transfer switching device, comprising: an actuator adapted to perform a transfer operation on power supplies; one or more drive mechanisms connected to the actuator and adapted to mechanically drive the actuator; a controller adapted to output electric power to the one or more drive mechanisms; and a connection member comprising wires, a first port portion, and one or more second port portions electrically connected to the first port portion via the wires, the first port portion being electrically connectable to the controller, the one or more second port portions being respectively corresponding to the one or more drive mechanisms, each of the second port portions being electrically connectable to a corresponding drive mechanism.

In the embodiments of the present disclosure, a connection member is provided to connect one or more drive mechanisms for mechanically driving the actuator to a common controller, so as to adjust a number of drive mechanisms based on the current level. In this way, most components can be shared among products of different current levels, without the necessity for designing different product frameworks for different current levels. This cannot only remarkably reduce the research and development cost and cycle, but can also optimize the product size, to better maintain consistency of products of the same series.

In some embodiments of the present disclosure, each of the drive mechanisms comprises a first drive portion adapted to cause the actuator to perform a transfer operation from a first power source to a second power source, and a second drive portion adapted to cause the actuator to perform a transfer operation from the second power source to the first power source, and each of the second port portions comprises a first connector and a second connector that are electrically connectable to the first drive portion and the second drive portion of a corresponding drive mechanism, respectively. With those embodiments, different drive portions can be used to reliably implement transfer from the first power source to the second power source and transfer in the other way around, respectively.

In some embodiments of the present disclosure, the connection member comprises a fixing part adapted to restrain at least part of the wires, and an unrestrained wire length between the first connector and the fixing part is different than an unrestrained wire length between the second connector and the fixing part such that, if the first connector is connected to the second drive portion of the corresponding drive mechanism, the second connector cannot be connected to the first drive portion of the corresponding drive mechanism. With those embodiments, the present disclosure can prevent the first connector and the second connector from being connected to wrong drive portions, thus avoiding a failure of the power transfer switching device caused by incorrect wiring.

In some embodiments of the present disclosure, the controller comprises a first output port and a second output port that are adapted to output electric power to the first drive portion and the second drive portion, respectively; and the first port portion comprises a third connector electrically connected to respective first connectors of the one or more second port portions and electrically connectable to the first output port of the controller, and a fourth connector electrically connected to respective second connectors of the one or more second port portions and electrically connectable to the second output port of the controller. With those embodiments, the two output ports of the controller can output current in different directions to the first drive portion and the second drive portion, respectively, to thus implement power source transfer in different directions.

In some embodiments of the present disclosure, each of the drive mechanisms comprises a fifth connector electrically connected to the first drive portion, and a sixth connector electrically connected to the second drive portion. With those embodiments, it is conducive to reliable connection of the drive portions of the drive mechanism to multiple other components.

In some embodiments of the present disclosure, the fifth connector is electrically connectable to the first connector of the corresponding second port portion, and the sixth connector is electrically connectable to the second connector of the corresponding second port portion. With those embodiments, a reliable connection between the connection member and the respective drive mechanisms can be achieved.

In some embodiments of the present disclosure, the fifth connector is directly electrically connectable to the first output port of the controller, and the sixth connector is directly electrically connectable to the second output port of the controller. With those embodiments, in the case of requiring only one drive mechanism, the drive mechanism can be directly connected to the controller to simplify the connection between the connectors and the drive mechanism.

In some embodiments of the present disclosure, each of the drive mechanisms further comprises a bracket that is adapted to fix the first connector and the second connector of the corresponding second port portion, or adapted to fix the fifth connector and the sixth connector of this drive mechanism. With those embodiments, the connectors of the connection member or the connectors of the drive mechanism can be fixed to achieve stable plug-in.

In some embodiments of the present disclosure, two wires for providing a round-trip current loop are connected to terminals at two side edges of corresponding connectors in the first connector through the sixth connector, respectively. With those embodiments, it can be guaranteed that two wires at the corresponding connector have a sufficient insulation distance, to thus improve the safety of the device.

In some embodiments of the present disclosure, both of the first drive portion and the second drive portion comprise an electromagnetic device that comprises at least one of an electric motor and an electromagnet assembly. With those embodiments, the drive mechanism can provide a drive force to the actuator in a simple and reliable manner.

The Summary is to introduce a selection of concepts in a simplified form that are further described below in the Detailed Description. This Summary is not intended to identify key features or essential features of the present disclosure as described herein, nor is it intended to be used to limit the scope of the present disclosure.

### BRIEF DESCRIPTION OF THE DRAWINGS

The above and other objectives, features, and advantages of the present disclosure will become more apparent, through the following detailed description of the example embodiments with reference to the accompanying drawings, where the same or similar reference symbols refer to the same or similar components.
Fig. 1 illustrates a perspective view of a power transfer switching device according to embodiments of the present disclosure.
Fig. 2 illustrates an exploded view of some components of a power transfer switching device according to embodiments of the present disclosure.
Fig. 3 illustrates a perspective view of a connection member of a power transfer switching device according to embodiments of the present disclosure.
Fig. 4 illustrates a schematic diagram of connections of some components of a power transfer switching device according to embodiments of the present disclosure.
Fig. 5 illustrates a schematic diagram of connections of some components of a power transfer switching device according to embodiments of the present disclosure.
Fig. 6 illustrates a partially enlarged view of a power transfer switching device proximal to a drive mechanism according to embodiments of the present disclosure.
Fig. 7 illustrates a partially enlarged view of a power transfer switching device proximal to a further drive mechanism and a controller according to embodiments of the present disclosure.

### DETAILED DESCRIPTION OF EMBODIMENTS

Reference will now be made to the drawings to describe in detail the embodiments of the present disclosure. Although embodiments of the present disclosure are shown in the drawings, it would be appreciated that the present disclosure could be implemented in various forms, not confined to the embodiments as described here. On the contrary, the embodiments are provided to make the present disclosure more thorough and complete and to fully convey the scope of the present disclosure to those skilled in the art. Alternative embodiments will occur to those skilled in the art from the following description without departing from the spirit and scope of the present disclosure.

As used herein, the term "includes" and its variants are to be read as open terms that mean "includes, but is not limited to." Unless indicated otherwise, the term "or" is to be read as "and/or." The term "based on" is to be read as "based at least in part on." The term "an example embodiment" and "an embodiment" are to be read as "at least one embodiment." Other explicit or implicit definitions may be included hereinafter.

Embodiments of the present disclosure provide an improved power transfer switching device. In the improved solution, an appropriate number of drive mechanisms can be provided in the power transfer switching device based on the main loop current level, and a connection member is utilized to connect one or more drive mechanisms to a common controller such that the controller can supply output current in parallel to one or more drive mechanisms. For a low current level, a single drive mechanism or a few drive mechanisms may be used in the power transfer switching device to provide a small drive force; for a high current level, a plurality of drive mechanisms may be used in the power transfer switching device to provide a large drive force. In this way, most components can be shared among products with different current levels, making it unnecessary to design different product frameworks for different current levels. This cannot only remarkably reduce the research and development cost and cycle, but can also optimize the product size, to better maintain consistency of products of the same series.

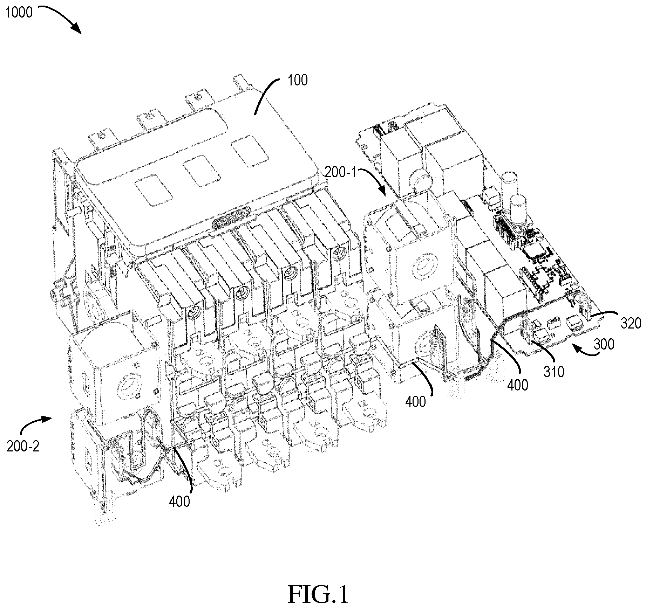

Fig. 1 illustrates a perspective view of a power transfer switching device 1000 according to embodiments of the present disclosure. By way of example, the power transfer switching device 1000 may be a dual-power automatic transfer switch, and it can be connected in series in a primary loop to provide power of a first or second power source to a load and switched between the first and the second power source. For example, when the first or the primary power source is connected to a load, the power transfer switching device 1000 can switch the power source from the first power source to the second power source as required or in the event of failure of the first power source, and can switch the power source from the second power source back to the first power source as required or in the case where the first power source is restored.

As shown in Fig. 1, the power transfer switching device 1000 includes an actuator 100 adapted to perform a transfer operation on power supplies. By way of example, the actuator 100 may disconnect the power source from the load through a mechanical action as driven by an external force, and connect a further power source to the load. For example, the actuator 100 can perform an opening operation on a current loop between the first power source and the load, and after the first power source is disconnected from the load, the actuator 100 can perform a closing operation on a current loop between the second power source and the load, to thus implement a switching operation from the first power source to the second power source.

According to embodiments of the present disclosure, the power transfer switching device 1000 includes one or more drive mechanisms connected to the actuator 100 and adapted to mechanically drive the actuator 100. By way of example, the power transfer switching device 1000 may include two drive mechanisms 200-1 and 200-2, where each drive mechanism may include, for example, an electromagnetic device such as an electric motor, an electromagnet assembly, and the like, to convert electric energy into kinetic energy. The drive mechanisms 200-1 and 200-2 may be connected to the actuator 100 directly or via a transmission mechanism, thereby providing a drive force to the actuator 100 to perform a power source transfer operation. It would be appreciated that the number of drive mechanisms disposed in the power transfer switching device 1000 may be more or less, for example, 3, 4 or only 1, rather than being limited to 2, which depends on the current level of the main loop. For example, for a low current level, since a relatively small drive force is required by the actuator to perform the opening and closing operations, there may be only one drive mechanism disposed in the power transfer switching device; and for a high current level, since a relatively large drive force is required by the actuator to perform the opening and closing operations, there may be 2 or more drive mechanisms disposed in the power transfer switching device. In an embodiment, the drive mechanisms 200-1 and 200-2 may be disposed on two sides of the actuator 100, and more drive mechanisms, if required, may be disposed along the two sides of the actuator 100.

According to embodiments of the present disclosure, the power transfer switching device 1000 includes a controller 300 adapted to output electrical power to one or more drive mechanisms. By way of example, the controller 300 can acquire information indicative of a power source state of the main loop, for example, a detection signal indicating whether the first or second power has failed. When the controller 300 determines that the current power source of the main loop has failed or receives a user instruction indicating power source switching, the controller 300 may output electric power to the drive mechanisms 200-1 and 200-2. As such the drive mechanisms 200-1 and 200-2 can use the electric power to generate a drive force to allow the actuator 100 to complete the power switching operation, thereby avoiding a power interruption to the load.

The controller 300 may include, for example, a processing unit and a power conversion unit. The processing unit can process the received detection signal or user instruction, and control the power conversion unit to perform power conversion. The power conversion unit may be connected to the utility grid or other appropriate power sources to receive electric power, and convert, as controlled by the processing unit, the received electric power to electric power required by the drive mechanisms. The above processing unit includes, but is not limited to, a Central Processing Unit (CPU), a Digital Signal Processor (DSP), a Digital Signal Processor (DSP), a Field Programmable Gate Array (FPGA), an Application Specific Integrated Circuit (ASIC), an Application Specific Standard Product (ASSP), a System On Chip (SOC), a Complex Programmable Logic Device (CPLD), and any appropriate processor, microcontroller, etc. The above power conversion unit includes, but is not limited to, an AC-DC converter, a DC-DC converter, a DC-AC converter, an AC-AC converter, or an appropriate combination thereof.

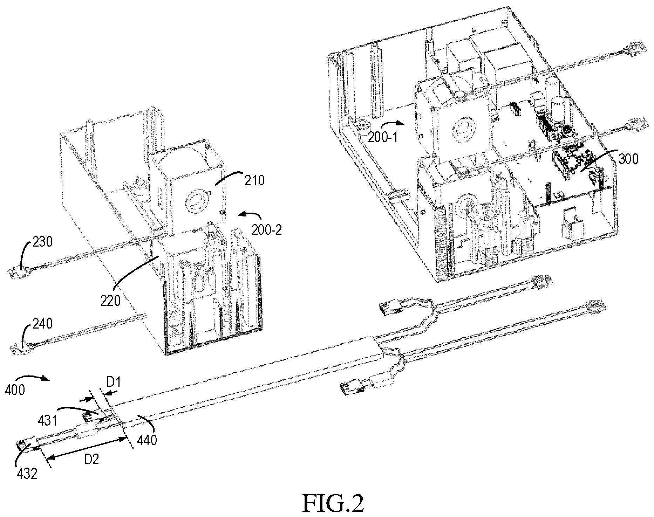

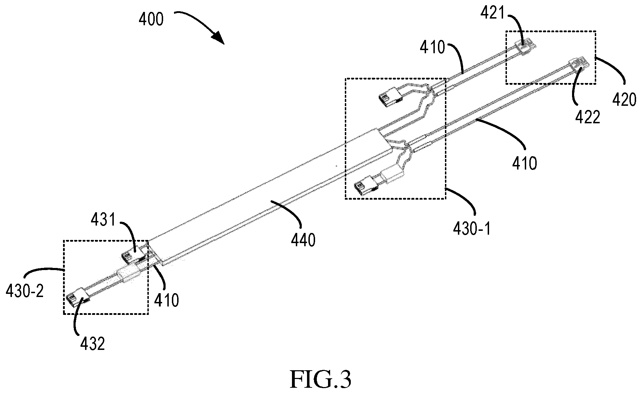

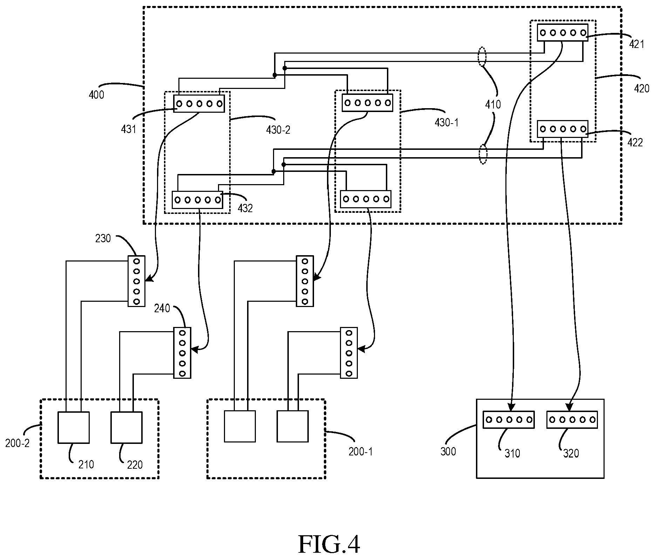

Fig. 2 is an exploded view of some components of the power transfer switching device 1000 according to embodiments of the present disclosure, Fig. 3 is a perspective view of a connection member 400 of the power transfer switching device 1000 according to embodiments of the present disclosure, and Fig. 4 is a schematic diagram of connections of some components of the power transfer switching device 1000 according to embodiments of the present disclosure.

As shown in Figs. 1-4, the power transfer switching device 1000 may further include a connection member 400 that includes wires 410, a first port portion 420, and one or more second port portions electrically connected to the first port portion 420 via the wires 410. By way of example, the one or more second port portions may include two second port portions 430-1, 4320-2. However, it would be appreciated that the connection member 400 may include more or fewer second port portions, which depends on the number of drive mechanisms disposed in the power transfer switching device 1000.

The first port portion 420 can be electrically connected to the controller 300, and the one or more second port portions correspond to one or more drive mechanisms, where each second port portion can be electrically connected to a corresponding drive mechanism. By way of example, the second port portion 430-1 may be electrically connected to the corresponding drive mechanism 200-1, and the second port portion 430-2 may be electrically connected to the corresponding drive mechanism 200-2. In this way, the controller 300 can output electric power to the drive mechanisms 200-1 and 200-2 via the connection member 400, i.e., the controller 300 can output electric power to the drive mechanism 200-1 via the first port portion 420 and the second port portion 430-1, and can output electric power to the drive mechanism 200-2 via the first port portion 420 and the second port portion 430-2.

With the connection member 400, a common controller can be used to output electric power to one or more drive mechanisms, to stimulate those drive mechanisms to generate a sufficient drive force for enabling the actuator to complete the power transfer operation. This configuration makes it possible to conveniently adjust the number of drive mechanisms and the number of second port portions of the connection member based on the main loop current level used in the power transfer switching product when the power transfer switching product is designed. For example, for a high current level, more drive mechanisms and second port portions are provided; and for a low current level, fewer drive mechanisms and second port portions are provided. Such adjustment can be achieved only by increasing or reducing the drive mechanisms and changing the connection member simply. Therefore, the configuration and size of the product can be adjusted flexibly and conveniently based on the current level, and the design can cover all product models from low current level to high current level, without the need for designing different frameworks for different current levels, thereby greatly reducing the research and development cycle and cost.

It is worth noting that the power transfer switching device 1000 may further include other components not shown in Fig. 1, for example, a device housing, auxiliary fixing elements for the actuator, controller and drive mechanisms, and other electrical and electronic components.

In some embodiments of the present disclosure, each of the drive mechanisms 200-1, 200-2 includes a first drive portion 210 adapted to cause the actuator 100 to perform the transfer operation from the first power source to the second power source, and a second drive portion 220 adapted to cause the actuator to perform the transfer operation from the second power source to the first power source. The second port portion 430-1 or 430-2 includes a first connector 431 and a second connector 432, and the first connector 431 and the second connector 432 of each second port portion can be electrically connected to the first drive portion 210 and the second drive portion 220 of the corresponding drive mechanism, respectively.

By way of example, each drive portion 210 or 220 may include an electromagnet device such as a motor, an electromagnet assembly, or the like, to implement drive in different directions. The first connector 431 of the second port portion 430-2 is connected to the first drive portion 210 of the corresponding drive mechanism 200-2, and the second connector 432 of the second port portion 430-2 is connected to the second drive portion 220 of the corresponding drive mechanism 200-2. A first connector and a second connector of a further second port portion 430-1 can be connected likewise, details of which are omitted here for brevity. Therefore, the controller 300 can supply electric power to two drive portions via the connection member 400, respectively. However, it would be appreciated that each drive mechanism may be provided with only one drive portion, and each second port portion may be provided with only one connector. In the circumstance, the drive portion cannot only provide the actuator 100 with a drive force for switching from the first power source to the second power source, but also can provide the actuator 100 with a drive force for switching from the second power source to the first power source. In this way, the solution of the present disclosure can also be implemented.

In some embodiments of the present disclosure, the controller 300 includes a first output port 310 and a second output port 320 which are adapted to output electric power to the first drive portion 210 and the second drive portion 220, respectively. The first port portion 420 includes a third connector 421 and a fourth connector 422. The third connector 421 is electrically connected to the respective first connectors 431 of the second port portions 430-1, 430-2, and can be electrically connected to the first output port 310 of the controller 300. The fourth connector 422 is electrically connected to the respective second connectors 432 of the second port portions 430-1, 430-2, and can be electrically connected to the second output port 320 of the controller.

By way of example, the first output port 310 of the controller 300 can provide electric power to the first drive portion 210 of the drive mechanism 200-2 via the third connector 421 of the first port portion 420 and the first connector 431 of the second port portion 430-2, and the second output port 320 of the controller 300 can provide electric power to the second drive portion 220 of the drive mechanism 200-2 via the fourth connector 422 of the first port portion 420 and the second connector 432 of the second port portion 430-2. Likewise, the controller 300 can provide electric power to two drive portions of the drive mechanism 200-1, details of which are omitted here for brevity.

In some embodiments of the present disclosure, each drive mechanism includes a fifth connector 230 electrically connected with the first drive portion 210, and a sixth connector 240 electrically connected with the second drive portion 220. By way of example, each of the drive mechanisms 200-1 and 200-2 may be provided with two connectors 230 and 240 for the two drive portions 210 and 220, to reliably connect the two drive portions 210 and 220 to other components.

In some embodiments of the present disclosure, the fifth connector 230 can be electrically connected to the first connector 431 of the corresponding second port portion, and the sixth connector 240 can be electrically connected to the second connector 432 of the corresponding second port portion. For example, the fifth connector 230 of the drive mechanism 200-2 may be electrically connected to the first connector 431 of the second port portion 430-2, and the sixth connector 240 of the drive mechanism 200-2 may be electrically connected to the second connector 432 of the second port portion 430-2. The fifth connector and the sixth connector of the drive mechanism 200-1 may be connected similarly to the second port portion 430-1. Therefore, a reliable connection between the connection member 400 and the drive mechanisms 200-1 and 200-2 can be achieved.

In an embodiment, each loop from the output port 310 or 320 of the controller 300 to the drive portion 210 or 220 of the drive mechanism 200-1 or 220-2 may include two wires to provide a round-trip path for current, and when the two wires are connected to corresponding connectors in the first connector through the sixth connector, the two wires may be connected to terminals at both side edges of the respective connectors to provide a sufficient insulation distance for the two wires.

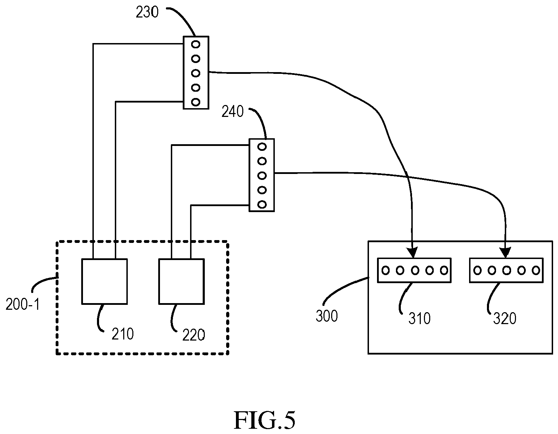

Fig. 5 illustrates a schematic diagram of connections of some components of a power transfer switching device 1000 according to a further embodiment of the present disclosure. As shown therein, the fifth connector 230 of the drive mechanism can be directly electrically connected to the first output port 310 of the controller 300, and the sixth connector 240 can be directly electrically connected to the second output port 320 of the controller 300. Specifically, in the case where the power transfer switching device 1000 includes only one drive mechanism 200-1, the connectors of the drive mechanism 200-1 may be used to directly connect the drive mechanism to the controller 300. In this way, the drive mechanism 200-1 may use the connectors 230 and 240 to directly acquire output electric power from the controller 300, without the connection member 400, to thus simplify the connection between the controller and the drive mechanism. However, it would be appreciated that, for ease of extending the drive mechanism, in the case where only one drive mechanism 200-1 is arranged, the connection 400 may also be provided to connect the drive mechanism 200-1 to the controller 300, which can implement the solution of the present disclosure as well.

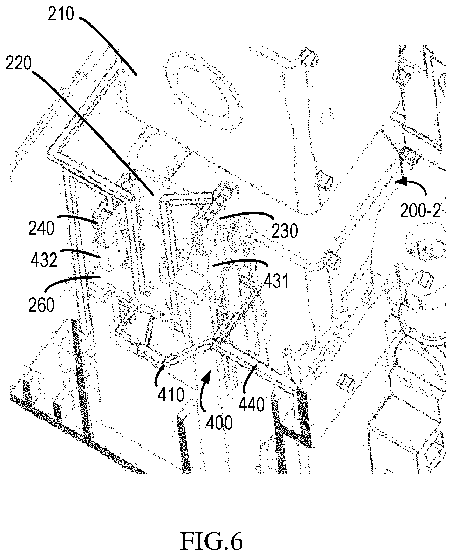

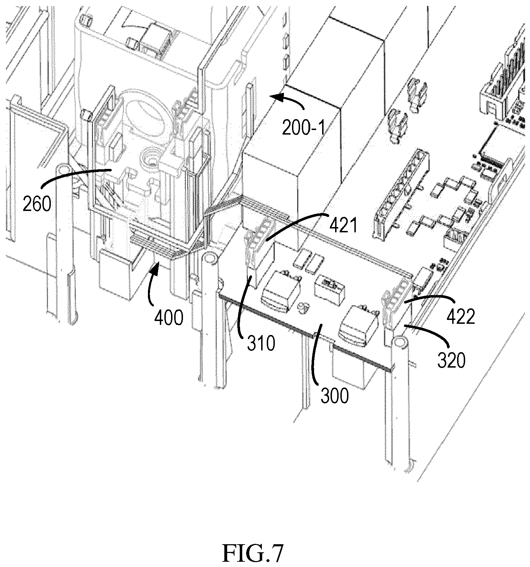

Fig. 6 illustrates a partially enlarged view of the power transfer switching device 1000 in Fig. 1 proximal to the drive mechanism 200-2, and Fig. 7 illustrates a partially enlarged view of the power transfer switching device 1000 in Fig. 1 proximal to the further drive mechanism 200-1 and the controller 300. As shown in Figs. 1, 5 and 6, the drive mechanisms 200-1 and 200-2 each include a bracket 260 adapt to fix a first connector 431 and a second connector 432 of a corresponding second port portion. By way of example, the connection member 400 may extend along the side edges of the controller 300, the drive mechanism 200-1, the actuator 100 and the drive mechanism 200-2. For example, the connection member 400 may extend to the proximity of the bracket 260 of the drive mechanism 200-2, and the bracket 260 may include a pair of clamp structures for fixing the connector. The pair of clamp structures can fix the first connector 431 and the second connector 432 of the connection member 400 in place, allowing the fifth connector 230 and the sixth connector 240 of the corresponding drive mechanism 200-2 to be plugged into the first connector 431 and the second connector 432 respectively. Alternatively, the bracket 260 can also be adapted to fix the fifth connector 230 and the sixth connector 240 of the drive mechanism. For example, the pair of clamp structures of the bracket 260 can also fix the fifth connector 230 and the sixth connector 240 of the drive mechanism 200-2 in place, allowing the first connector 431 and the second connector 432 of the connection member 400 to be plugged into fifth connector 230 and the sixth connector 240 of the drive mechanism 200-2 respectively.

Returning to Figs. 2 and 3, in some embodiments of the present disclosure, the connection member 400 includes a fixing part 440 for restraining at least a part of the wires, and an unrestrained wire length between the first connector 431 and the fixing part 440 is different than an unrestrained wire length between the second connector 432 and the fixing part 440, such that the second connector 432 cannot be connected to the first drive portion 210 of the respective drive mechanism when the first connector 431 is connected to the second drive portion 220 of the corresponding drive mechanism.

By way of example, the fixing part 440 may wrap a part of the wires 410 or restrain a part of the wires 410 in other manners, to cause it to extend in a predetermined layout direction and define a free extension distance of the respective connectors of the connection member 400 relative to the fixing part 440, which corresponds to an unrestrained wire length of the respective connectors and the fixing part 440. The unrestrained wire length between the first connector 431 and the fixing part 440 is set to be different than the unrestrained wire length between the second connector 432 and the fixing part 440. For example, as shown in Fig. 2, the unrestrained wire length between the first connector 431 and the fixing part 440 is D1, and the unrestrained wire length between the second connector 432 and the fixing part 440 is D2. Accordingly, the second connector 432 has a greater free extension distance than the first connector 431.

This arrangement can efficiently prevent the first connector 431 and the second connector 432 from being plugged into the wrong drive portions. For example, as shown in Fig. 6, for the drive mechanism 200-2 and the second port portion 430-2 of the connection member 400, the plugging position of the fifth connector 230 associated with the first drive portion 210 and the first connector 431 is closer to the fixing part 440, and the plugging position of the sixth connector 240 associated with the second drive portion 220 and the second connector 432 is farther away from the fixing part 440. If the second connector 432 having the greater free extension distance is plugged into the closer fifth connector 230 by mistake, the first connector 431 having the smaller free extension distance cannot be plugged into the farther sixth connector 240. Such anti-misplug design can effectively prevent an operator from connecting the first connector 431 and the second connector 432 to the wrong drive portions.

Incorrect connections between the connectors of the connection member 400 and the drive portions may lead to a failure of the power transfer switching device at normally completing the power transfer operation. Specifically, as stated above, the first connectors 431 of two second port portions 430-1 and 430-2 should be respectively connected to the first drive portions 210 of the two drive mechanisms 200-1 and 200-2, and the second connectors 432 of the two second port portions 430-1 and 430-2 should be respectively connected to the second drive portions 220 of the two drive mechanisms 200-1 and 200-2. Therefore, the two first drive portions 210 of the two drive mechanisms 200-1 and 200-2 can jointly generate a drive force for transfer from the first power source to the second power source, or the two drive portions 220 of the two drive mechanism 200-1 and 200-2 can jointly generate a drive force for transfer from the second power source to the first power source, to thus enabling the drive force to be provided to the actuator 100 directly or via a transmission mechanism. However, if the connectors are plugged wrongly, the two drive mechanisms cannot generate a desired drive force. For example, if the first connector 431 of the second port portion 430-2 is mistakenly plugged into the sixth connector 240 of the drive mechanism 200-2 and thus connected with the second drive portion 220 while the second connector 432 of the second port portion 430-2 is mistakenly plugged into the fifth connector 230 of the drive mechanism 200-2 and thus connected to the first drive portion 220, and if the first connector and the second connector of the further second port portion 430-1 are still connected normally, the two first drive portions 210 or second drive portions 220 of the two drive mechanisms 200-1 and 200-2 will generate opposing drive forces, leading to a failure of the actuator 100 at completing the power transfer operation. Therefore, with an appropriate arrangement of the fixing part, the first connector and the second connector can have different free extension distances. Such free extension distances can effectively prevent the first connector and the second connector from being connected to the wrong drive portions, thus avoiding a failure of the power transfer switching device caused by incorrect wiring, and can improve the operation reliability of the device.

According to the embodiments of the present disclosure, there is provided an improved power transfer switch architecture. In the architecture, a number of drive mechanisms may be adjusted as required, and a connection member may be used to connect the drive mechanisms to a common controller such that most of components can be shared among products with different current levels, without the necessity for designing different product frameworks for different current levels. This cannot only remarkably reduce the research and development cost and cycle, but can also optimize the product size, to better maintain consistency of products of the same series.

Many modifications and other implementations of the disclosure set forth herein will come to mind to those skilled in the relevant art to which this disclosure pertains having the benefit of the teachings presented in the foregoing descriptions and the associated drawings. Therefore, it is to be understood that the embodiments of the disclosure are not to be limited to the specific embodiments disclosed and that modifications and other embodiments are intended to be included within the scope of the disclosure. Moreover, while the above description and the related drawings describe example embodiments in the context of certain example combinations of components and/or functions, it should be appreciated that different combinations of components and/or functions may be provided by alternative embodiments without departing from the scope of the present disclosure. In this regard, for example, other combinations of components and/or functions than those explicitly described above are also contemplated as within the scope of the present disclosure. Although specific terms are employed herein, they are used in a generic and descriptive sense only and not for purposes of limitation.

## Claims

1. A power transfer switching device (1000), comprising:
an actuator (100) adapted to perform a transfer operation on power supplies;
one or more drive mechanisms (200-1, 200-2) connected to the actuator (100) and adapted to mechanically drive the actuator (100);
a controller (300) adapted to output electric power to the one or more drive mechanisms (200-1, 200-2); and
a connection member (400) comprising wires (410), a first port portion (420), and one or more second port portions (430-1, 430-2) electrically connected to the first port portion (420) via the wires (410), the first port portion (420) being electrically connectable to the controller (300), the one or more second port portions (430-1, 430-2) being respectively corresponding to the one or more drive mechanisms (200-1, 200-2), each of the second port portions (430-1, 430-2) being electrically connectable to a corresponding drive mechanism (200-1, 200-2).

2. The power transfer switching device (1000) of claim 1, wherein:
each of the drive mechanisms (200-1, 200-2) comprises a first drive portion (210) adapted to cause the actuator (100) to perform a transfer operation from a first power source to a second power source, and a second drive portion (220) adapted to cause the actuator (100) to perform a transfer operation from the second power source to the first power source, and
each of the second port portions (430-1, 430-2) comprises a first connector (431) and a second connector (432) that are electrically connectable to the first drive portion (210) and the second drive portion (220) of a corresponding drive mechanism (200-1, 200-2), respectively.

3. The power transfer switching device (1000) of claim 2, wherein the connection member (400) comprises a fixing part (440) adapted to restrain at least part of the wires, and
wherein an unrestrained wire length between the first connector (431) and the fixing part (440) is different than an unrestrained wire length between the second connector (432) and the fixing part (440) such that, if the first connector (431) is connected to the second drive portion (220) of the corresponding drive mechanism (200-1, 200-2), the second connector (432) cannot be connected to the first drive portion (210) of the corresponding drive mechanism (200-1, 200-2).

4. The power transfer switching device (1000) of claim 2,
wherein the controller (300) comprises a first output port (310) and a second output port (320) that are adapted to output electric power to the first drive portion (210) and the second drive portion (220), respectively, and
wherein the first port portion (420) comprises a third connector (421) electrically connected to respective first connectors (431) of the one or more second port portions (430-1, 430-2) and electrically connectable to the first output port (310) of the controller (300), and a fourth connector (422) electrically connected to respective second connectors (423) of the one or more second port portions (430-1, 430-2) and electrically connectable to the second output port (320) of the controller (300).

5. The power transfer switching device (1000) of claim 4, wherein each of the drive mechanisms (200-1, 200-2) comprises a fifth connector (230) electrically connected to the first drive portion (210) and a sixth connector (240) electrically connected to the second drive portion (220).

6. The power transfer switching device (1000) of claim 5, wherein the fifth connector (230) is electrically connectable to the first connector (431) of the corresponding second port portion (430-1, 430-2), and the sixth connector (240) is electrically connectable to the second connector (432) of the corresponding second port portion (430-1, 430-2).

7. The power transfer switching device (1000) of claim 5, wherein the fifth connector (230) is directly electrically connectable to the first output port (310) of the controller (300), and the sixth connector (240) is directly electrically connectable to the second output port (320) of the controller (300).

8. The power transfer switching device (1000) of claim 6, wherein each of the drive mechanisms (200-1, 200-2) further comprises a bracket (260) that is adapted to fix the first connector (431) and the second connector (432) of the corresponding second port portion (430-1, 430-2), or adapted to fix the fifth connector (230) and the sixth connector (240) of this drive mechanism.

9. The power transfer switching device (1000) of claim 5, wherein two wires for providing a round-trip current loop are connected to terminals at two side edges of corresponding connectors in the first connector (230) through the sixth connector (240), respectively.

10. The power transfer switching device (1000) of claim 2, wherein both of the first drive portion (210) and the second drive portion (220) comprise an electromagnetic device that comprises at least one of: an electric motor and an electromagnet assembly.
